# EUROPEAN PATENT APPLICATION

(11) **EP 0 881 816 A2**
(43) Date of publication of application: **02.12.1998**
(21) Application number: 98109214.1
(22) Date of filing: 20.05.1998
(51) Int. Cl.: H04N 1/00, H04N 1/32

(54) **Electronic mail-capable communication terminal device**

(30) Priority: 26.05.1997 JP 135565/97
(71) Applicant: Murata Kikai Kabushiki Kaisha, Minami-ku, Kyoto-shi, Kyoto (JP)
(72) Inventor: Eguchi, Masashi, Fushimi-ku, Kyoto-shi, Kyoto (JP); Okada, Kazuhiro, Moriyama-shi, Shiga (JP)
(74) Representative: Liedl, Christine, Dipl.-Chem.

(57) **Abstract**

A facsimile machine (13) provided with electronic mail communication capability and a plurality of functions related to electronic mail communication. A plurality of users use the single facsimile machine (13). Each user can select some of the available functions such as automatic reception, automatic printing and text mail reception. The selected set of functions are stored in a table together with user codes and passwords. When one of the users who has selected a manual printing mode enters his or her user code and password correctly, an electronic mail sent from a remote facsimile machine is printed out upon printing command from the user. If another user who has selected an automatic printing mode enters its user code and password, an electronic mail designated to this user is automatically printed out on a recording sheet.

## Description

The present invention relates to an electronic mail-capable communication terminal device like a facsimile machine provided with the ability to access electronic mail.

In recent years, computer communication networks like the Internet, comprised of local computer communication networks further networked over communications lines and capable of transmitting electronic mail, have grown. Computer communication networks allow for easy error correction, and permit communication with computers not only domestically, but overseas, as well, at only the cost of communicating with a local provider (a service that provides connection to such a computer network.)

Conventional communication procedures and methods for G3 facsimile machines differ from that of computer communication networks, and therefore it has not been possible to connect these machines directly to computer communication networks. However, by converting into electronic mail format the image data of a document to be sent, facsimile machines can be enabled to transmit image data to these computer communication networks.

When a facsimile machine provided with electronic mail communication capabilities receives electronic mail, it accesses the network to check a mailbox, and if there is mail to be downloaded, it is downloaded. In such a conventional facsimile machine, the electronic mail reception methods including both a manual reception method which requires the user to initiate the operation, and an automatic reception method which is executed automatically such that electronic mail reception is performed at predetermined intervals are known.

Further, when received electronic mail is printed out, in accordance with a selected electronic mail reception method, it may be printed out by manual operation (e.g., by pressing a print start key) if the facsimile machine is set to manual mail reception mode, printed out automatically if the facsimile machine is set to automatic printing and automatic mail reception mode, or may be saved as confidential data whereby reception notification is printed out instead of the received data if the facsimile machine is not set to automatic printing but set to automatic mail reception mode. Confidentially received electronic mail is saved in memory for a predetermined amount of time, and is printed out when the user performs a manual operation.

When a facsimile machine on a mail receiving side which is provided with multiple electronic mail communication-related functions as described above is used by a plurality of users, it may be selectively be set to one of these functions, but it cannot be set to perform different functions for different users.

Japanese Patent Application, Laid-Open Publication No. 8-274965 filed March 30, 1995 with JPO and published October 18, 1996 discloses a facsimile machine on a receiving side which has a plurality of reception modes. If the facsimile machine detects a telephone number (facsimile number) of a remote facsimile machine, it refers to a registration list to find out whether this facsimile number is already registered on the receiving side. If the facsimile number is found in the registration list, the facsimile machine receives data in a predetermined reception mode. One reception mode is assigned to one facsimile number in the registration table.

Japanese Patent Application, Laid-Open Publication No. 9-18509 filed June 28, 1995 with JPO and published January 17, 1997 discloses a plurality of electronic mail apparatuses on a receiving side which is used by a single user. When the user is working on a certain apparatus but electronic mail is delivered to another apparatus, the user does not know arrival of the electronic mail. To avoid such inconvenience, the another apparatus is designed to transmit the electronic mail to the certain apparatus so that the user can receive the electronic mail without walking to the another apparatus and operating the another apparatus.

It is an object of the present invention to provide an electronic mail-capable communication terminal device like a facsimile machine which can perform for each of a plurality of users different electronic mail communication-related functions by storing for each user function settings such as whether or not to conduct automatic electronic mail reception ("automatic reception mode"), whether or not to print received electronic mail automatically ("automatic printing mode"), and how long confidentially received electronic mail should be stored ("confidential mail storage duration").

In one embodiment of the present invention, a communication terminal device provided with electronic mail communication capability and which can accept a plurality of function settings ("preferences") related to electronic mail communication is comprised of a storage means for storing the function settings in accordance with data specifying electronic mail addresses (one function setting for each user), an accepting means for accepting data specification, and an operating means for performing electronic mail communication functions according to the specified data.

The electronic mail-capable communication terminal device stores the settings of functions according to data specified by electronic mail addresses such as user codes. Each of the users on the receiving side can select at least one desired function among the plurality of functions available on the receiving side. Based on a user code entered by a user, the communication terminal device identifies which user intends to use the communication terminal device for reception (or transmission) of electronic mail. Then, a particular electronic mail communication function corresponding to the entered user code is performed. In this way a plurality of electronic mail-related functions can be set for a plurality of users respectively.

The functions of the communication terminal device according to the present invention may include an automatic electronic mail reception function. If a certain user selects this automatic mail reception mode for his or her individual reception mode, this user's mailbox is periodically checked and newly arrived mail is downloaded automatically at predetermined intervals. After that, for example, the downloaded electronic mail is automatically printed out. This eliminates the need for the user to access the network in order to retrieve electronic mail. The contents of the electronic mail can therefore be learned relatively quickly after the electronic mail's arrival. In the case of confidential reception, the contents of the received electronic mail is stored in a memory.

The functions of the communication terminal device of the present invention may include a function to save the received mail for a specified amount of time. In this way, the received electronic mail is stored for a specified period according to the convenience of the individual users. This may be useful in the case where a user is absent for an extended period of time.

The functions of the communication terminal device may further include a function that maintains line connection to a provider or network even after a user of the communication terminal device of the invention has sent electronic mail. Subsequent to mail transmission, the communication terminal device sees if there is any electronic mail designated to the same user from remote terminal devices. The communication terminal device connects to the provider or personal computer network and sends electronic mail to, for instance, a remote computer. Subsequent to mail sending, the communication terminal device does not disconnect from the network but it checks a mail box of the user who just sent the electronic mail, and if there is electronic mail addressed to the sender (i.e., the user of the commutation terminal device of the invention), the communication terminal device of the invention now receives the electronic mail Accordingly, mounting costs from connecting to the network over the telephone line each time the network is connected to can be avoided. Transmission and reception of electronic mail can be performed during the same connection.

The functions of the electronic mail-capable communication terminal device of the present invention may include an automatic output function for automatically outputting the contents of automatically received mail, and the communication terminal device may further include a priority reception means for giving precedence to downloading of electronic mail for users who has set the automatic output function over downloading of electronic mail for users who has not set the automatic output function (the electronic mail is stored in a memory without printing). When a mailbox is checked and each user's electronic mail automatically downloaded, the reception priority is given. In this way the chance of causing a disconnection of the telephone line and the disabling of electronic mail reception due to memory overload is reduced.
- FIG.1: is a block diagram of the communication terminal device of the present invention.
- FIG.2(a): is an outline illustration of an example of a user registration table used in the present invention.
- FIG.2(b): illustrates an encryption table used in the present invention.
- FIGs. 3 and 4: illustrate in combination a flow chart showing the operation of the communication terminal device of the present invention at the time of user registration.
- FIG.5: is a flow chart showing the operation of the communication terminal device of the present invention at the time of electronic mail reception.
- FIG. 6: is a flow chart showing the operation of the communication terminal device of the present invention at the time of electronic mail transmission.

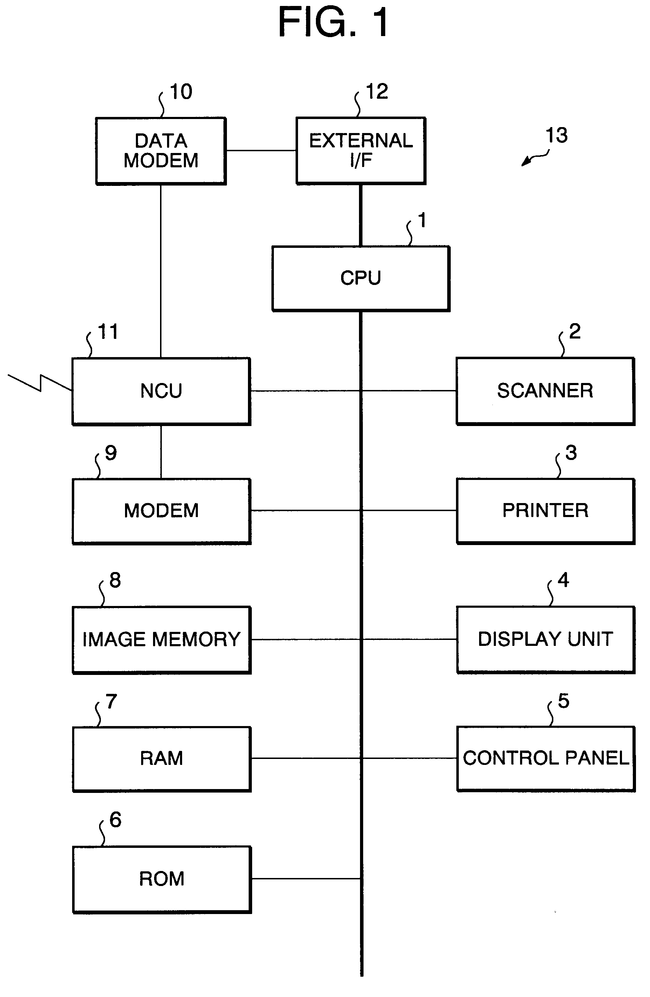

Referring to FIG. 1, illustrated is an electronic mail-capable facsimile machine 13 according to the present invention. In this embodiment, the facsimile machine 13 utilizes the Internet as a computer communication network.

CPU 1 controls not only the various hardware elements of the facsimile machine 13 over the bus, but also executes communication procedures of software stored in ROM 6 for encoding or decoding image data according to coding schemes such as MH (Modified Huffman), MR (Modified Read), MMR (Modified-MR), etc., converting the coded image data to and from TIFF (Tagged Image File Format) format, and then to and from binary text format, editing the electronic mail, switching the modems, and controlling the RS232C line by using AT commands.

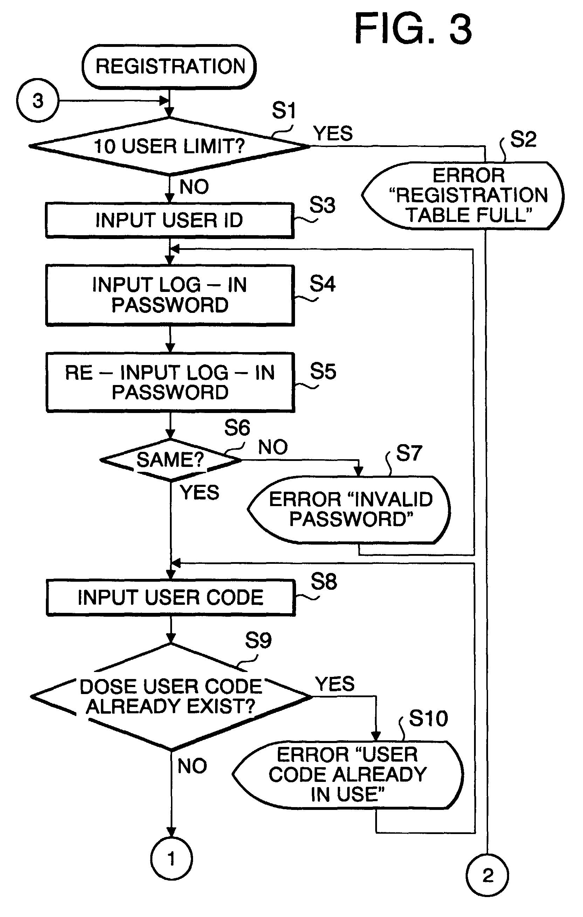

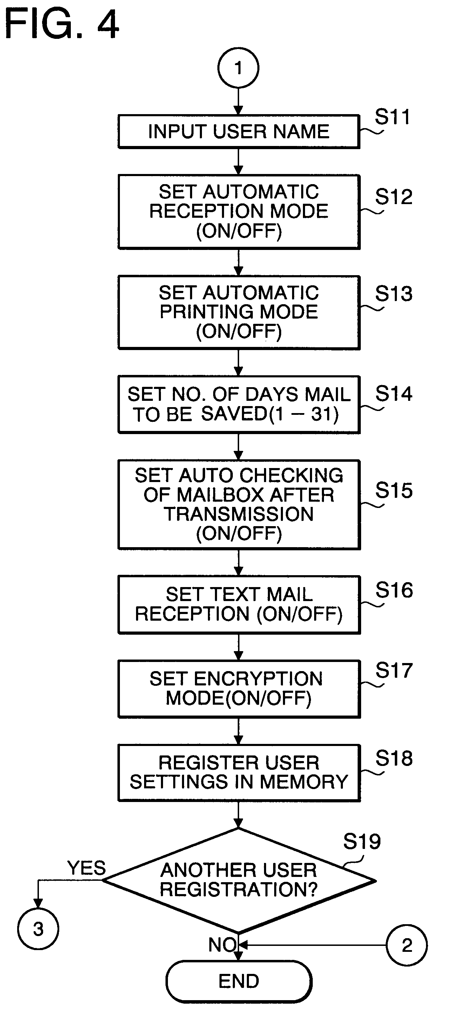

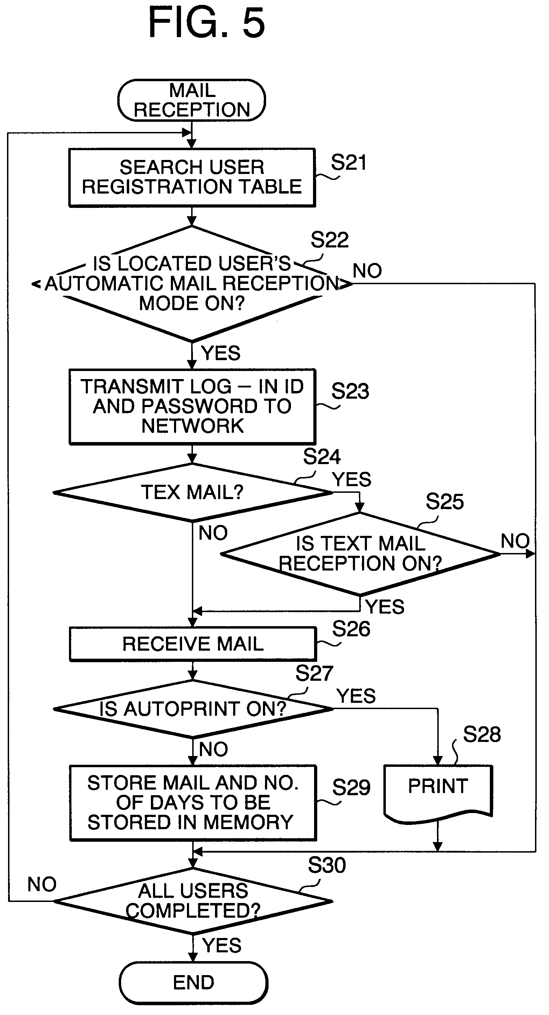

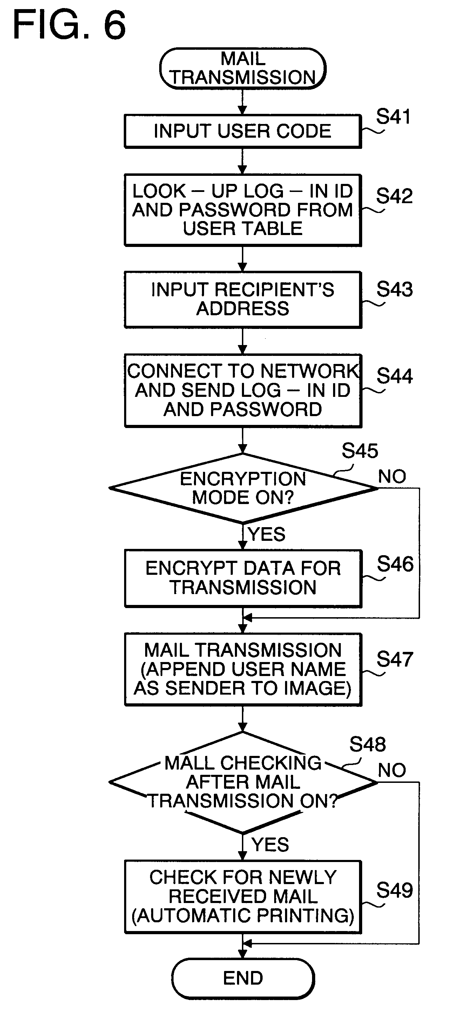

CPU 1, as described below, accepts the function settings which are arbitrarily selected or determined by the users. CPU 1 executes software to perform the following operations, for instance: (1) to prepare (or reference) a user registration table providing relationship between users and functions (as shown in FIG. 3 and FIG. 4), which table is stored in a predetermined area of the RAM 7 (user registration); (2) by utilizing the user's log-in ID and password in the user registration table, to log-into the provider and check a mailbox at specified intervals thereby performing mail reception such as automatic mail reception for the user (FIG. 5: mail reception); (3) by referring to the user registration table, to print the received mail automatically or to save it in memory (output control); (4) to maintain the line connection and check the mail box subsequent to sending of electronic mail, and to download electronic mail automatically when there is electronic mail in the mail box (FIG. 6: mail transmission); and (5) to encrypt electronic mail data for transmission by referring to the user registration table and encryption table which specifies whether or not to encrypt electronic mail data and the encryption methods to be used.

In image format conversion, when electronic mail image data is transmitted, the G3-encoded formatted image is converted into a TIFF image which can be used by common computers. When image data is received, the image is converted back from TIFF to G3 encoded format. TIFF format has been made public by Adobe Systems, Inc., and treatment of various classes of image data has been specified including not just binary black-and-white data, but also gray-scale and full-color. One of these classes, class F, defines image data conversion by means of MH, MR, MMR, etc. (ITU Recommendations, G3 format). Consequentially, by appending Class F TIFF header information to the top of the G3 type encoded image data, TIFF conversion can be enabled.

In binary text conversion, binary data (G3 image data converted by TIFF conversion) is converted to text data when electronic mail image data is transmitted, and text data is converted to binary image data when electronic mail image data is received. Since some computers on the Internet cannot handle binary image data, when binary TIFF image data is sent over the Internet, it must first be converted to text data in order for it to be reliably received by the recipient. The text data format for use over the Internet has been specified as 7-bit code in RFC (Request For Comments) 822 and 1341 published by the Internet Engineering Task Force (IETF).

RFC 822 and 1341 disclose how to use MIME (Multipurpose Internet Mail Extensions) base 64 to convert between binary and text data. According to this method, each of 64 characters (capital letters, lower case letters, numbers, "+" and "/") is assigned to one value of the 6-bit binary data set, enabling the conversion to text data. MIME is defined in, for example, RFC1521.

In mail editing, when electronic mail image data is sent, CPU 1 appends electronic mail header information to the text-formatted TIFF image data enabling it to be sent as electronic mail. When electronic mail image data is received, CPU 1 removes the electronic mail header information from the electronic mail text formatted data, and converts the text data back to TIFF image data format. Since certain specified information must be included in the header of Internet electronic mail for administrative purposes, CPU 1 appends "From: (the user's electronic mail address)," "To: (the recipient's electronic mail address)," and "Subject: (the subject information such as title)" to the top of the TIFF image data.

Scanner 2 scans an image with an image scanner like a CCD and outputs binary black-and-white image data. Printer 3 is provided with an electro-photography type printer and outputs image data received from other G3 facsimile machines or received over the Internet.

Display unit 4 is provided with an LCD device, and displays the operating status of the facsimile machine 13 and image data.

Control panel 5 contains a number pad, speed-dial keys, one-touch dialing keys and various function keys required to operate the facsimile machine 13. ROM 6 stores software required to operate the facsimile machine 13. RAM 7, comprised of SRAM, flash-memory, or the like, temporarily stores data generated during execution of the software.

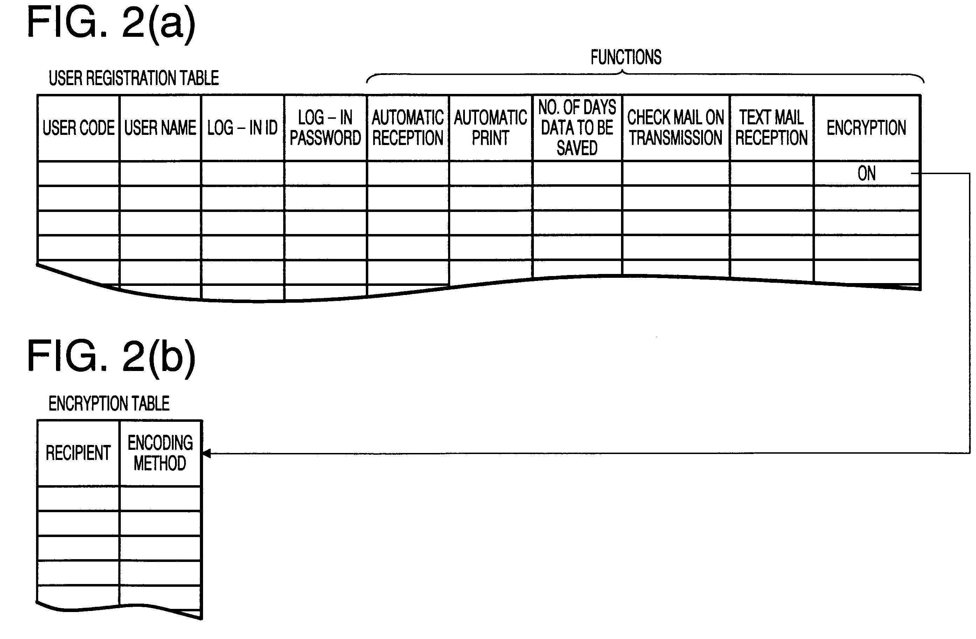

In the illustrated embodiment, RAM 7 stores a user registration table like that shown in FIG. 2(a), an encryption code table like that shown in FIG. 2(b), confidentially received electronic mail data, and the like.

The reception methods which the users can select in the present embodiment are a manual reception mode for allowing the users to download electronic mail by manual operation when they want to have their electronic mail, an automatic reception mode for automatically downloading electronic mail messages at predetermined intervals, and a downloading at transmission (or after-transmission downloading) mode for downloading electronic mail upon completion of electronic mail transmission without logging out from the network.

Further, the print modes for printing received electronic mail include a manual print mode for printing out received electronic mail as it is received upon manual operation of a user, an automatic print mode for automatically printing out received electronic mail, and the like. If automatic printing of received electronic mail is not set, the received electronic mail can instead be stored in memory (memory reception), and instead of printing out the received electronic mail data, a reception notification message can be output.

In the case of data reception subsequent to data transmission, the received electronic mail is automatically printed out.

When the received electronic mail is confidential, it is stored in memory until the predetermined amount of time has passed, at which time it would be printed out automatically.

In the user registration table, the stored function settings are electronic mail communication-related functions including, automatic reception (ON/OFF), automatic printing (ON/OFF), the number of days electronic mail should be saved for when automatic printing is OFF, automatic checking of incoming electronic mail upon completion of transmission (ON/OFF), text mail reception ON/OFF, and encryption of electronic mail data for transmission (ON/OFF). Function settings data can be stored, in this example, for up to 10 people. For each of the users, function settings are stored corresponding to user code, user name, user log-in ID, log-in password, and/or connect number (number used to connect to the provider or protocol).

If the users are already provided with an account (user name, log-in password), they can log-onto the network and there is no need to obtain a new account for the machine.

The encoding methods corresponding to the recipient preferences can be accepted and stored in the encryption table illustrated in FIG.2(b).

Image memory 8 is comprised of DRAM or the like, and stores encoded image data.

Modem 9 is a modem for normal facsimile communication of image data scanned in by scanner 2, and is not provided with data communication capabilities.

Data modem 10 is a modem for communication of image data converted to electronic mail for transmission or reception via the Internet. Data modem 10 is connected via a cable to an external telephone terminal provided on, for instance, a chip in NCU 11. Data modem 10 is also connected to via an RS232C line to the serial port of an external I/F 12 for connection to a personal computer or the like. It should be noted that modem 9 can also be a data-modem capable facsimile modem.

NCU 11 opens and closes an analog telephone circuit.

Next, operation of the facsimile machine 13 of the present embodiment will be described with reference to the flow charts of FIG. 3 through FIG. 6.

First, the user registration operation is described by referring to FIG. 3 and FIG. 4.

When instructed by a user to perform registration, it is checked to see if the 10 user limit of the table has been reached (Step S1). If there are already 10 users stored in the table, display unit 4 displays an error message like "user registration filled" on the display screen (Step S2) and quits.

If, on the other hand, all 10 users have not been registered, the user ID and password for logging-onto the network are requested (Steps S3 and S4). In order to double-check the input, the user is requested to re-input his or her password (Step S5). It is then determined whether or not the reentered password is the same as that input the first time (Step S6), and if they are different, an error message like "invalid password" is displayed on the screen (Step S7).

If the reentered password is the same as the password originally entered, the user is asked to enter user code (Step S8). Next it is determined whether or not the user code is a code already being used by another registered user (Step S9), and if this is the case, an error message like "user code already taken" is displayed on the screen (Step S10).

If the user code is not being used, then the user name is requested (Step S11).

Next, the user is requested to set automatic mail reception (ON/OFF) (Step S12), and if the user selects ON, he or she is then requested to set automatic printing (ON/OFF) (Step S13).

If automatic mail printing is set to OFF, then the user is requested to input the number of days for which stored mail should be saved (1-31) (Step S14). After the number of days for which mail should be saved is input at Step 14, after setting automatic electronic mail reception to OFF at Step S12, or after setting automatic printing to ON at step S13, the user is requested to decide whether or not the facsimile machine 13 should check for new mail upon transmission of electronic mail (Step S15).

Further, the user is requested to set text electronic mail reception and encoding of electronic mail at transmission either ON or OFF (Steps S16, S17), and the user settings selected in the foregoing are stored in the user registration table in RAM 7 (Step S18).

These steps S1 through S18 are repeated until all users are registered or until the answer at Step S1 becomes YES (Step S19).

Next, the operation of the facsimile machine 13 during electronic mail reception will be described in reference to the flowchart in FIG. 5.

The user registration table is searched (Step S21), and it is checked to see if the automatic reception mode for the user who is the object of the search is ON or OFF (Step S22). If the automatic reception mode of the referenced user is OFF, the next user is referenced.

If the user's settings are set such that automatic electronic mail reception is ON, the log-in ID and password of the user are read out of the user registration table to the network (Step S23), and the mailbox is checked. However, at this time, electronic mail of users whose settings are set such that automatic electronic mail reception and automatic printing are both ON takes precedence over that of electronic mail for users whose preferences are set for confidential mail reception. Consequentially, in the case of a user where automatic electronic mail reception is ON but automatic printing is OFF, the program moves to the next user and looks up their function settings.

Next it is determined whether or not electronic mail in the mailbox is common text formatted electronic mail or not (Step S24). If it is text formatted electronic mail, then the user registration table is referenced to see if text electronic mail reception is ON or OFF (Step S25). If text electronic mail reception is OFF, the program moves to the next user and looks up their function settings.

If text reception mode for the currently referenced user is ON and the electronic mail has a text format that the facsimile machine 13 can decipher (MIME text, for example), then the facsimile machine 13 downloads the text format data. If the electronic mail is not in the text format (TIFF format, for example), the facsimile machine 13 simply downloads the electronic mail (Step S26). The user registration table is again referenced to determine if automatic printing is ON or OFF (Step S27). If it is ON, the contents of the electronic mail are printed out (Step S28).

If automatic printing is OFF, the electronic mail is stored along with data indicating the number of days the message is to be stored for in a predetermined area of RAM 7 (Step S29). These steps S21 through S29 are repeated until all the users have been processed (Step S30).

Next, the operation of the facsimile machine 13 during electronic mail transmission is described in reference to the flowchart in FIG. 6.

The user is prompted to input the user code (Step S41), and the user's corresponding log-in ID and password are read out of the user registration table (Step S42). The user is then prompted to input the recipient's electronic mail address (Step S43). The facsimile machine 13 then connects to the network and transmits the log-in ID and the password (Step S44). The user registration table is then referenced, and It is determined whether or not the encryption mode is ON or OFF (Step S45). If the encryption mode is ON, the encryption table is referenced, and the electronic mail to be sent is encrypted with a method corresponding to that input for the recipient of the electronic mail message (Step S46).

Either the encrypted data, or in the case where the encryption mode is OFF, the unaltered electronic mail message is then transmitted over the network (Step S47). At this time the user name is appended as the sender information, and the electronic mail message is transmitted.

Next it is checked to see if the user's preference is set to check for electronic mail sent from others upon transmitting messages (Step S48). If this setting is OFF, the telephone line is disconnected and the program ends.

On the other hand, if this preference is ON, the line connection is maintained and the mailbox is checked for new messages. Electronic mail for this user is then downloaded if any (Step S49). Next, the user registration table is referenced, and the received electronic mail is printed out according to the print mode setting of the user such as automatic printing mode.

## Claims

1. A communication terminal device (13) provided with electronic mail communication capability and a plurality of functions related to electronic mail communication, comprising:
means (1) for accepting selective setting of the plurality of functions;
storage means (7) for storing the selected functions according to data specifying an electronic mail address;
accepting means (1, 5) for accepting data specification; and
operating means (1) for performing the selected functions corresponding to the specified data during electronic mail communication.

2. The communication terminal device (13) of claim 1, characterized in that the plurality of functions include a function for automatic electronic mail reception.

3. The communication terminal device (13) of claim 1 or 2, characterized in that the plurality of functions include a function for accepting a specification for an amount of time during which received electronic mail is stored, and a function for saving the received electronic mail for that amount of time.

4. The communication terminal device (13) of claim 1, 2 or 3, characterized in that the plurality of functions include a function for maintaining line connection even after completion of electronic mail transmission to a remote terminal device, a function for checking a mail box to see if there is any electronic mail addressed to a user of the communication terminal device (13) who has just transmitted the electronic mail, and a function for automatically receiving or downloading electronic mail from the mail box if any.

5. The communication terminal device (13) of claim 2, 3 or 4, characterized in that the plurality of functions include an automatic output function for automatically outputting contents of an automatically received electronic mail, and the communication terminal device (13) further includes priority reception means (1) for giving priority to reception of electronic mail for an electronic mail address for which the automatic output function has been set over reception of electronic mail for an en electronic mail address for which the automatic output function has not been set.

6. A communication terminal device (13) usable by a plurality of users, comprising:
means (5) for allowing each of a plurality of users to select at least one function of a plurality of functions of the communication terminal device (13);
means (7) for storing selected functions according to identification data of a user who selected these functions; and
means (1) for causing the communication terminal device (13) to operate in accordance with the selected functions when a user who selected these functions enters his or her identification data.

7. The communication terminal device (13) of claim 6, characterized in that the plurality of functions include a function for automatically receiving electronic mail.

8. The communication terminal device (13) of claim 6 or 7, characterized in that the plurality of functions include a function for allowing each of the users to set a period of time during which received electronic mail is stored, and a function for saving received electronic mail for that period of time.

9. The communication terminal device (13) of claim 6, 7 or 8, characterized in that the plurality of functions include a function for maintaining line connection even after completion of electronic mail transmission to a remote terminal device, a function for checking a mail box to see if there is any electronic mail addressed to a user of the communication terminal device (13) who has just transmitted the electronic mail, and a function for automatically receiving or downloading electronic mail from the mail box if any.

10. The terminal device (13) of claim 7, 8 or 9, characterized in that the plurality of functions include an automatic print function for automatically printing contents of an automatically received electronic mail, and the communication terminal device (13) further includes priority reception means (1) for giving priority to reception of electronic mail for an electronic mail address for which the automatic print function has been set over reception of electronic mail for an en electronic mail address for which the automatic print function has not been set.

11. The terminal device (13) of any one of claims 6 to 10, characterized in that the identification data includes a password, a user code, a log-in ID and/or a user name.

12. The terminal device (13) of any one of claims 6 to 11, characterized in that the plurality of functions include a function for encoding electronic mail before transmission to a remote terminal device.

13. The terminal device (13) of any one of claims 6 to 12, characterized in that the terminal device (13) further includes means (4) for avoiding storage of the same identification data from different users.
